(19) Europäisches Patentamt
European Patent Office
Office européen des brevets

(11) EP 0 887 367 A2

# (12) EUROPÄISCHE PATENTANMELDUNG

(43) Veröffentlichungstag:
**30.12.1998 Patentblatt 1998/53**

(51) Int. Cl.[6]: **C08G 77/46**, C10L 1/28, B01D 19/04

(21) Anmeldenummer: **98110656.0**

(22) Anmeldetag: **10.06.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **24.06.1997 DE 19726653**

(71) Anmelder: **Th. Goldschmidt AG**
**45127 Essen (DE)**

(72) Erfinder:
- **Boinowitz, Tammo, Dr.**
  **45131 Essen (DE)**
- **Duetsch, Michael, Dr.**
  **45239 Essen (DE)**
- **Kugel, Kerstin**
  **40882 Ratingen (DE)**
- **Schlachter, Ingo, Dr.**
  **45277 Essen (DE)**
- **Weier, Andreas, Dr.**
  **45289 Essen (DE)**

## (54) Organofunktionell modifizierte Polysiloxane

(57) Die Erfindung betrifft organofunktionell modifizierte, Phenylderivate enthaltende Polysiloxane und deren Verwendung zum Entschäumen von flüssigen Kohlenwasserstoffsystemen. Unter dem Begriff Polysiloxane sollen im Rahmen dieser Erfindung auch oligomere Siloxane verstanden werden.

EP 0 887 367 A2

## Beschreibung

Die Erfindung betrifft organofunktionell modifizierte Polysiloxane und deren Verwendung zum Entschäumen von flüssigen Kohlenwasserstoffsystemen. Unter dem Begriff Polysiloxane sollen im Rahmen dieser Erfindung auch oligomere Siloxane verstanden werden.

In US-A-4 690 688 bzw. GB-B-2 173 510 wird ein Polyethersiloxan als Entschäumer von Kohlenwasserstoffgemischen aufgeführt, beschrieben durch die allgemeine Formel

$$R_3SiO(R_2SiO)_x(RR'SiO)_ySiR_3$$

wobei
das Verhältnis x : y im Bereich 1 : 1 bis 9 : 1 liegt, mindestens 80 % der Reste R Methylgruppen sind, jeder Rest R' einen ggf. endverschlossenen Polyether darstellt, der aus der Anlagerung von mindestens 80 % Ethylenoxid an einen Startalkohol, wie Allylalkohol, entstanden ist. Solche Oxyalkylenketten können statistisch angeordnet sein oder eine Blockstruktur haben und werden mit der allgemeinen Formel wiedergegeben:

$$Q(OC_2H_4)_p(OCH_3C_2H_3)_qOZ$$

Dabei ist Q ein zweibindiger Rest, Z entweder ein Wasserstoff oder eine Acetylgruppe.

Die DE-A-40 32 006 lehrt ein Verfahren zum Entschäumen und/oder Entgasen organischer Systeme, wie Dieselöl, durch Zugabe eines Organopolysiloxans, welches aus Siloxaneinheiten der allgemeinen Formel

$$R_aSiO_{\frac{4-a}{2}} \quad \text{und} \quad R_bA_cSiO_{\frac{4-(b+c)}{2}}$$

besteht, wobei

R einen einwertigen Kohlenwasserstoffrest mit 1 bis 18 Kohlenstoffatomen je Rest bedeutet,
A ein Rest der allgemeinen Formel

$$\begin{array}{l} -CH_{1-x}[R^1O(R^2O)_vH]_x \\ \quad \| \\ \ CH_{2-y}[R^1O(R^2O)_wH]_y \end{array}$$

ist, worin

$R^1$ einen Rest der Formel $-CR^3H-$ bedeutet,

$R^3$ = Wasserstoff- oder einwertiger organischer Rest,

$R^2$ einen Rest der Formel $-CR^4H-CH_3$ oder $-(CH_2)_3-$ bedeutet,

$R^4$ = Wasserstoff- oder einwertiger organischer Rest,

v, w jeweils 0 oder ganze Zahl, wobei v+w durchschnittlich 0 bis 16 ist,

x, y 0 oder 1, wobei x+y 1 oder 2 ist,

a = 1, 2 oder 3,
b = 0, 1 oder 2 und
c = 1 oder 2, wobei die Summe b+c nicht größer als 3 ist.

In DE-A-43 25 359 wird eine Verbindung beschrieben, die aus einem Organopolysiloxan besteht, welches Estergruppen der allgemeinen Formel

$$R_aA_bSiO_{\frac{4-a-b}{2}}$$

aufweist, wobei

R gleich oder verschieden sein kann und einwertige, SiC-gebundene Kohlenwasserstoffreste mit 1 bis 18 Kohlenstoffatomen je Rest bedeutet,

A ein Rest der allgemeinen Formel

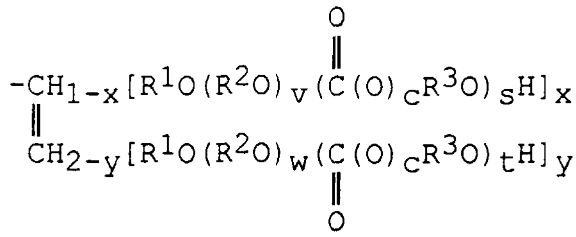

ist, worin

$R^1$, $R^2$ und $R^3$ jeweils einen zweiwertigen Kohlenwasserstoffrest bedeuten,
v und w jeweils 0 oder eine ganze Zahl sind, wobei die Summe v+w eine ganze Zahl von 1 bis 16 ist,
s und t jeweils 0 oder eine ganze Zahl sind, wobei die Summe s+t eine ganze Zahl von 1 bis 20 ist,
x, y jeweils 0 oder 1 sind, wobei die Summe x+y gleich 1 oder 2 ist,
c = 0 oder 1 ist,

a = 1, 2 oder 3 und
b = 0, 1 oder 2 ist.

Die verwendeten Siloxanylalkendiyl-bis-ω-hydroxypolyoxyalkylene selbst und ihre Herstellung sind in der DD-A-255 737 beschrieben.

In der DE-C-43 43 235 wird ein Verfahren zur Entschäumung von Dieselkraftstoff beschrieben, wobei organofunktionell modifizierte Polysiloxane der allgemeinen Formel

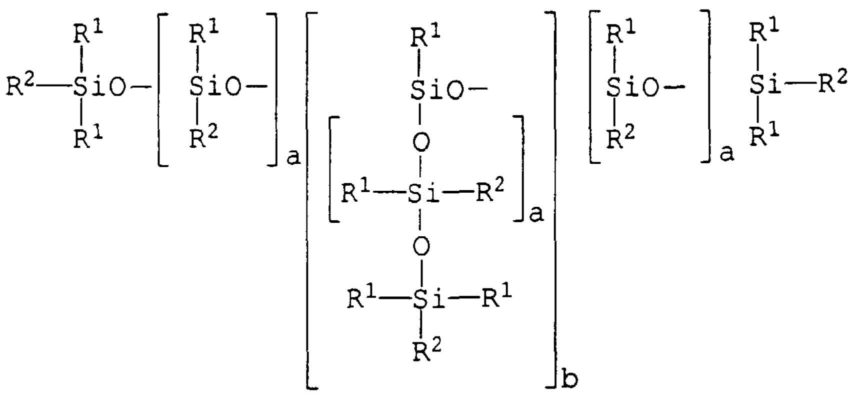

verwendet werden, wobei

die Reste $R^1$ Alkyl- oder Arylreste sind,
die Reste $R^2$ aus mehreren der nachfolgenden Verbindungsklassen ausgewählt sind: Butenderivate, Alkanolderivate, Polyether und Alkylreste.

Diese Butenderivate und Polyether enthalten Oxyalkylen- und Oxypropyleneinheiten in verschiedener Zusammensetzung.

Die US-A-5 542 960 bzw. WO 95/01412 beschreibt die Verwendung von Organopolysiloxanen zur Entschäumung von Dieselkraftstoff. Als Organopolysiloxane werden Terpolymere der allgemeinen Formel

$$MD_xD^*_yD^{**}_zM$$

verwendet, wobei $M = O_{0,5}Si(CH_3)_3$, $D = OSi(CH_3)_2$, $D^* = OSi(CH_3)R$, $D^{**} = OSi(CH_3)R'$ ist, R einen Polyether und R' ein Phenolderivat bedeuten, die Summe $x+y+z = 35$ bis 350 ist, die Quotienten $x/(y+z) = 3$ bis 6 und $y/z = 0{,}25$ bis 9 betragen.

In DE-C-195 16 360 wird ein Verfahren zur Entschäumung von Dieselkraftstoff beschrieben, wobei organofunktionell modifizierte Polysiloxane der allgemeinen Formel

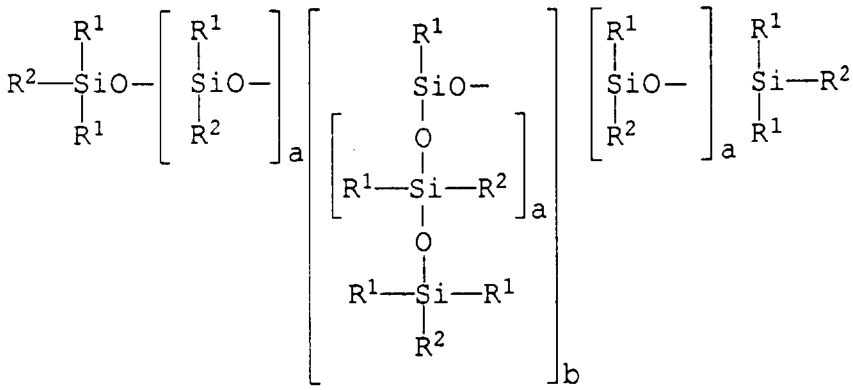

verwendet werden, wobei die Reste $R^1$ Alkyl- oder Arylreste sind, die Reste $R^2$ so ausgewählt sind, daß sie dem Rest $R^1$ gleichen, jedoch mindestens 10 % gleich einem Phenolderivat sind und weitere 10 % aus mehreren der nachfolgenden Verbindungsklassen ausgewählt sind: Butenderivate, Alkanolderivate und Alkylreste. Optional kann ein Polyether verwendet werden, der aus den Monomeren Ethylenoxid und Propylenoxid sowie einem Startalkohol aufgebaut ist.

In der deutschen Patentanmeldung 196 52 434.2 wird ein Verfahren zur Entschäumung von Dieselkraftstoff beschrieben, wobei Siliconpolyether-Copolymere der allgemeinen Formel

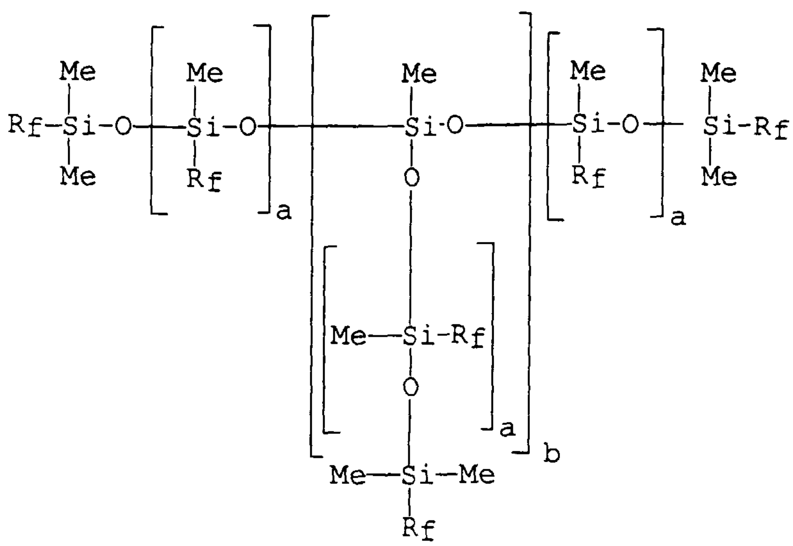

verwendet werden,

wobei die Reste $R_f$ Alkyl- oder Arylreste sind, jedoch mindestens 80 % der Reste $R_f$ Methylreste sind. $R_f$ ist entweder gleich $R^1$ oder gleich $R^2$ oder $R^3$, mit der Maßgabe, daß mindestens ein Rest $R_f$ der Rest $R^2$ ist, wobei $R^2$ ein Polyetherrest der Formel

$$-(Y)_c[O(C_2H_{4-d}R'_dO)_m(C_xH_{2x}O)_pZ]_w$$

ist, mit der Maßgabe, daß pro Copolymermolekül mindestens ein Rest R' einen gegebenenfalls substituierten Aromaten bezeichnet. Dabei ist c gleich 0 oder 1, d liegt zwischen 1 und 3, m ist größer und gleich 1, x ist eine ganze Zahl zwischen 2 und 4, p ist größer oder gleich 1, w liegt zwischen 1 und 4 und die Summe m+p beträgt zwischen 3 und 100.

$R^3$ ist ein aromatenfreier Polyetherrest der Formel

$$-(F)_q[O(C_xH_{2x}O)_r\,Z]_g$$

wobei g zwischen 1 und 4 betragen kann, q gleich 0 oder 1 ist, x zwischen 2 und 4 liegt, r größer oder gleich 3 ist und F ein g-bindiger Kohlenwasserstoffrest ist, der auch verzweigt sein kann.

Die Anbindung aromatenhaltiger Polyether an ein Polysiloxan ist bekannt und wird in EP-A-0 499 200 beschrieben. Allerdings handelt es sich dort ausdrücklich um eine sehr spezielle Verwendung als zellöffnende Verbindung für Polyurethanschaumstoffe. Man geht in Anspruch 1 davon aus, daß Siliconpolyether-Copolymere, deren Polyether aromatische Substituenten R in Form einer Phenylgruppe oder alkylsubstituiertem Phenyl in einer $C_2H_3RO$-Einheit aufweisen, eine schlechtere Löslichkeit in organischen Medien aufweisen als Siliconpolyether-Copolymere, deren Polyether aus Oxyethylen- und Oxypropyleneinheiten aufgebaut sind.

Um so erstaunlicher ist es, daß Verbindungen, bei denen die Kombination von Phenylderivaten mit aromatenhaltigen Polyethern, die beide an ein Polysiloxan gebunden sind, eine Löslichkeit in organischen Medien zeigen, die nicht weiter abnimmt, sondern sogar steigt. Das besondere Wesen dieser Verbindungen scheint also die Verknüpfung von Phenylderivaten mit aromatenhaltigen Polyethern zu sein, die offenbar im synergistischen Effekt der aromatischen Gruppen begründet liegt.

Die erfindungsgemäßen Verbindungen enthalten aromatenhaltige Polyether. Diese Addukte unterscheiden sich deutlich von den in WO 95/01412 verwendeten Polyethern in der Weise, als daß dort der Gewichtsanteil Ethylenoxid an den Ethermonomeren den Wert von 75 % überschreitet. Dieser hohe Ethylenoxidanteil ist ein Beleg dafür, daß durch den hohen hydrophilen Anteil die Balance zum hydrophoben Anteil wiederhergestellt werden muß. Bei den erfindungsgemäßen Verbindungen ist trotz des hohen Aromatenanteils dies überraschenderweise nicht notwendig, so daß der Gewichtsanteil Ethylenoxid am Polyether den Wert von 65 % nicht übersteigen muß. Des weiteren wird mit aromatenhaltigen Ethermonomeren, wie Styroloxid und $\alpha$-Methylstyroloxid, ein völlig anderer organischer Rest eingeführt, der, wie dem Fachmann geläufig und oben bereits ausgeführt worden ist, sich in seinen chemischen Eigenschaften deutlich von denen der Alkylketten, wie in Propylen-, Butylen- oder Octylenoxid, unterscheidet.

Gegenstand der Erfindung sind somit organofunktionell modifizierte Polysiloxane der allgemeinen Formel I

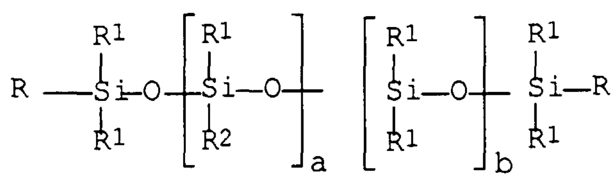

wobei

- R der Rest $R^1$ oder $R^2$ ist,
- $R^1$ Alkylreste mit 1 bis 4 Kohlenstoffatomen oder Arylreste sind, jedoch mindestens 80 % der Reste $R^1$ Methylreste sind,
- $R^2$ die Reste $R^{2A}$, $R^{2B}$ und $R^{2C}$ bedeuten, wobei die Reste $R^{2A}$ aus folgenden Resten ausgewählt sind:

(a) ein Phenylderivat mit der allgemeinen Formel

$$-R^3-(C_6H_{4-z}R^4{}_z)-OR^5$$

wobei

$R^3$ ein zweiwertiger Rest ist, der aus einem oder mehreren Kohlenwasserstoffresten mit 1 bis 18 Kohlenstoffatomen zusammengesetzt ist, die gegebenenfalls substituiert sind,
$R^4$ ein Hydroxyrest, ein Alkylrest mit 1 bis 6 Kohlenstoffatomen oder ein Alkoxyrest mit 1 bis 6 Kohlenstoffatomen ist, und
z eine Zahl von 0 bis 4 ist,
$R^5$ ein einwertiger Rest ist, der gleich oder verschieden ist und aus einem Wasserstoffrest oder Alkylrest mit 1 bis 6 Kohlenstoffatomen besteht,

(b) ein Polyetherrest der allgemeinen Formel

$$-(Y)[O(C_2H_{4-d}R^6{}_dO)_m(C_xH_{2x}O)_pZ]_w$$

ist, mit der Bedeutung

d = 1 bis 3,
$m \geq 1$,
x = 2 bis 4,
$p \geq 1$,
w = 1 bis 4,
Summe m+p = 3 bis 100,
$R^6$ = ein Wasserstoffrest, ein einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alkoxyrest und Hydroxyrest ausgewählt sind, wobei die Reste $R^6$ unterschiedlich sein können, jedoch pro Copolymermolekül mindestens ein Rest $R^6$ einen gegebenenfalls substituierten Aromaten bezeichnet,
Z = ein Wasserstoffrest oder ein einwertiger organischer Rest,
Y = ein (w+1)-bindiger Kohlenwasserstoffrest, der auch verzweigt sein kann,

die Reste $R^{2B}$ aus folgenden Resten ausgewählt sind:

(c) ein Alkenderivat mit der allgemeinen Formel

$$\begin{array}{l} -CH_{1-e}-[R^7O(R^8O)_fH]_e \\ \| \\ CH_{2-g}-[R^7O(R^8O)_hH]_g \end{array}$$

wobei

$R^7$ einen Rest der Formel $-CR^9H-$ bedeutet mit $R^9$ gleich Wasserstoffatom oder einwertiger organischer Rest,
$R^8$ einen Rest der Formel $C_2H_{4-d}R^{10}{}_d$ bedeutet mit $R^{10}$ gleich Wasserstoffatom oder einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alkoxyrest und Hydroxyrest ausgewählt sind, wobei die Reste $R^{10}$ unterschiedlich sein können,
e und g jeweils 0 oder 1 sind, wobei die Summe e+g 1 oder 2 ist,
f und h jeweils 0 oder eine ganze Zahl sind, wobei die Summe f+h durchschnittlich 0 bis 14 ist,

(d) der Rest $-(CH_2-)_iOR^{11}$,
wobei

$R^{11}$ ein Wasserstoff- oder ein einwertiger organischer Rest,
i eine Zahl von 2 bis 20 ist,

(e) der Rest $-(CH_2-)_jCH_3$,
wobei

j eine Zahl von 5 bis 30 ist,

der Rest $R^{2C}$ der Rest

$$-(CH_2-)_k(OC_2H_4-)_l(OC_3H_6-)_nOR^{12}$$

ist, wobei

$R^{12}$ ein Wasserstoff- oder ein einwertiger organischer Rest,
k eine Zahl von 2 bis 6,
l eine Zahl von 1 bis 50,
n eine Zahl von 0 bis 20 ist,

mit der Maßgabe, daß mindestens 10 % der Reste $R^2$ gleich dem Rest $R^{2A}$ sind,
wobei mindestens 10 % der Reste $R^{2A}$ gleich dem Rest (a) sind und mindestens 10 % gleich dem Rest (b) sind,
die Summe a+b eine Zahl von 2 bis 400 und das Verhältnis der Zahlen b/a zwischen 0,2 und 20 liegt.

Der Wert von b wie auch der Wert von a sind als durchschnittliche Werte im Polymermolekül zu verstehen, da die erfindungsgemäßen Polysiloxane in Form von - im Regelfall - äquilibrierten Gemischen vorliegen.

Bevorzugt liegt das Verhältnis der Zahlen b/a zwischen 1 und 18, besonders bevorzugt zwischen 3 und 15.

Die Reste $R^1$ sind Alkylreste mit 1 bis 4 Kohlenstoffatomen, wie Methyl-, Ethyl-, Propyl- oder Butylreste, oder Arylreste, wobei bei letzteren Phenylreste bevorzugt sind. Herstellungs- und preisbedingt sind die Methylreste bevorzugt, so daß mindestens 80 % der Reste $R^1$ Methylreste sein müssen. Besonders bevorzugt sind solche Polysiloxane, bei denen alle Reste $R^1$ Methylreste sind.

Das Wesen der vorliegenden Erfindung besteht insbesondere darin, daß organofunktionell modifizierte Polysiloxane verwendet werden, welche organofunktionelle Reste $R^2$ aufweisen. Diese Reste $R^2$ sind aus drei Hauptgruppen ausgewählt, nämlich aus den Resten $R^{2A}$, $R^{2B}$ und $R^{2C}$.

Zu den Resten $R^{2A}$ zählen die Phenylderivate (a) und die aromatenhaltigen Polyether (b). Zu den Resten $R^{2B}$ zählen die Alkenderivate (c), die Alkanole (d) und die Alkylketten (e). Der Rest $R^{2C}$ ist ein gewöhnlicher, nicht aromatenhaltiger Polyether.

Mindestens 10 % der Reste $R^2$ sind gleich dem Rest $R^{2A}$, wobei mindestens 10 % der Reste $R^{2A}$ gleich dem Rest (a) sind und mindestens 10 % gleich dem Rest (b) sind. Es ist also möglich, daß 90 % des Restes $R^{2A}$ gleich dem Rest (a) sind und die verbleibenden 10 % gleich dem Rest (b) sind. Umgekehrt ist es ebenfalls möglich, daß 90 % des Restes $R^{2A}$ gleich dem Rest (b) sind und die verbleibenden 10 % gleich dem Rest (a) sind.

Im folgenden sollen zunächst die Reste $R^{2A}$ näher beschrieben werden.

Hier stehen die Phenylderivate (a) zur Auswahl:

$$-R^3-(C_6H_{4-z}R^4_z)-OR^5$$

Im Rest (a) ist der Rest $R^3$ ein zweiwertiger Rest, der aus einem oder mehreren der Kohlenwasserstoffreste zusammengesetzt ist, die gegebenenfalls substituiert sind. Bevorzugt ist ein Alkylrest mit 2 bis 6 Kohlenstoffatomen. Besonders bevorzugt ist ein Alkylrest mit 2 bis 3 Kohlenstoffatomen.

Der Rest $R^4$ ist ein einwertiger Rest, der gleich oder verschieden ist und aus den Gruppen Alkylrest mit 1 bis 6 Kohlenstoffatomen, Alkyloxyrest oder Hydroxyrest ausgewählt ist. Bevorzugt sind Methylreste, der Hydroxyrest und Alkoxyreste mit 1 bis 6 Kohlenstoffatomen. Der Index z ist eine Zahl von 0 bis 4. Besonders bevorzugt ist z die Zahl 0 oder 1, sowie als Substituenten der Methyl- und Ethylrest.

Der Rest $R^5$ ist ein einwertiger Rest, der gleich oder verschieden ist und aus den Gruppen Wasserstoffrest oder Alkylrest mit 1 bis 6 Kohlenstoffatomen ausgewählt ist. Bevorzugt ist dieser Rest der Methyl- oder Ethylrest.

Die Reste (a) können in das Molekül des Polysiloxans durch Addition von Allyl- oder Vinylderivaten an SiH-Gruppen des Polysiloxans in Anwesenheit eines Hydrosilylierungskatalysators, z. B. entsprechend dem Verfahren der US-A-5 334 227, eingeführt werden. Bevorzugt sind Phenol- und Anisolderivate. Beispiele für entsprechende Phenolderivate sind Allylphenol und Eugenol (4-Allyl-2-Methoxyphenol), die besonders bevorzugt sind. Für entsprechende Anisolderivate ist Estragol (4-Allylanisol) ein Beispiel, das ebenfalls besonders bevorzugt ist.

Der Polyetherrest (b)

$$-(Y)[O(C_2H_{4-d}R^6_dO)_m(C_xH_{2x}O)_pZ]_w$$

wird durch Umsetzung eines Startalkohols, der bevorzugt Allylalkohol ist, durch Anlagerung von Monomeren gewonnen. Geeignet sind Ethylenoxid, Propylenoxid, Tetrahydrofuran, Butylenoxid, iso-Butylenoxid sowie für den aromatenhaltigen Teil $C_2H_{4-d}R^6{}_dO$ des Polyethers $\alpha$-Methylstyroloxid und bevorzugt Styroloxid, wobei d = 1 bis 3, m $\geq$ 1, x = 2 bis 4 und p $\geq$ 1, w = 1 bis 4 sind. $R^6$ ist ein Wasserstoffrest, ein einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alkoxyrest und Hydroxyrest ausgewählt sind, wobei die Reste $R^6$ unterschiedlich sein können, jedoch pro Copolymermolekül mindestens ein Rest $R^6$ einen gegebenenfalls substituierten Aromaten bezeichnet. Dabei kann die Zusammensetzung der Monomeren im Polyether beliebig gewählt sein, so daß beispielsweise Styroloxid-, Ethylenoxid- und und Propylenoxidblöcke enthalten sein können. Außerdem ist auch eine Mischung der Monomeren einsetzbar, so daß Polyether erhalten werden, in denen die Einheiten in statistischer Verteilung vorliegen. Die Reste Z können gleich oder verschieden sein und bedeuten unabhängig voneinander einen Wasserstoffrest oder einen einwertigen organischen Rest. Z kann dabei eine Alkylkette mit einem und bis 18 Kohlenstoffatomen, ein Benzylrest, ein alkylsubstituierter Benzylrest mit bis zu vier Kohlenstoffatomen im Alkylrest, eine $COR^{13}$-Gruppe mit einem Rest $R^{13}$, der eine Alkylkette mit einem und bis 18 Kohlenstoffatomen aufweist, eine $CONHR^{14}$-Gruppe mit einem Rest $R^{14}$, der ein Wasserstoffatom oder eine Alkylkette mit einem und bis 18 Kohlenstoffatomen aufweist, $CO_2R^{15}$, der eine Alkylkette mit einem und bis 18 Kohlenstoffatomen aufweist oder eine Alkylkette sein, die teilweise oder vollständig cyano- oder fluorsubstituiert ist. Vorzugsweise ist Z ein Wasserstoffrest, eine Acetylgruppe oder ein Methylrest. Der Index m hat vorzugsweise einen Zahlenwert von 1 bis 10, besonders bevorzugt von 2 bis 5, der Index p vorzugsweise einen Zahlenwert von 2 bis 20, besonders bevorzugt von 4 bis 10. Bei diesen Indizes handelt es sich um durchschnittliche Zahlen, da es bekannt ist, daß bei der Anlagerung von Epoxiden an Alkohole ein Gemisch von Verbindungen unterschiedlicher Kettenlänge erhalten wird.

Im folgenden werden die Reste $R^{2B}$ näher beschrieben.

Der Rest (c) ist ein Alkenderivat mit der allgemeinen Formel

$$\begin{array}{l} -CH_{1-e}-[R^7O(R^8O)_fH]_e \\ \| \\ CH_{2-g}-[R^7O(R^8O)_hH]_g \end{array}$$

$R^7$ ist ein Rest der Formel $-CR^9H-$, wobei $R^9$ für ein Wasserstoffatom oder einen einwertigen organischen Rest steht. Bevorzugt ist die Gruppe $R^7$ ein Methylen- oder Ethylenrest. $R^8$ bedeutet einen Rest der Formel $C_2H_{4-d}R^{10}{}_d$ mit $R^{10}$ gleich Wasserstoffatom oder einwertiger Kohlenwasserstoffrest mit 1 bis 18 Kohlenstoffatomen, der auch aromatisch und gegebenenfalls auch ein substituierter Aromat sein kann, wobei die Reste $R^{10}$ unterschiedlich sein können. Die Indizes e und g können jeweils Werte von 0 oder 1 annehmen, wobei die Summe e+g 1 oder 2 ist.

Die Indizes f und h sind jeweils 0 oder eine ganze Zahl, wobei die Summe f+h durchschnittlich 0 bis 14 ist. Bevorzugt beträgt die Summe der Zahlen f+h durchschnittlich 0 bis 8. Besonders bevorzugt ist die Summe der Zahlen f+h, wenn sie durchschnittlich 0 bis 4 beträgt. Bei diesen Indizes handelt es sich um durchschnittliche Zahlen, da es bekannt ist, daß bei der Anlagerung von Epoxiden, wie Ethylenoxid und Propylenoxid, an Alkohole ein Gemisch von Verbindungen unterschiedlicher Kettenlänge erhalten wird. Werden z. B. für e die Zahl 0, für g die Zahl 1 eingesetzt sowie für h gleich 0 und ist $R^9$ gleich einer Methylengruppe, erhält man als zu hydrosilylierendes Edukt Propargylalkohol, welches bevorzugt ist. Ein weiteres bevorzugtes Alkenderivat als Edukt sind 1,4-Butindiol-Derivate.

Diese Reste (c) können in das Molekül des Polysiloxans durch Addition von Alkindiyl-bis-$\omega$-hydroxypolyoxyalkylenen an SiH-Gruppen des Polysiloxans in Anwesenheit eines Hydrosilylierungskatalysators entsprechend dem Verfahren der DD-A-255 737 eingeführt werden.

Der Rest (d) ist ein Alkanolderivat mit der allgemeinen Formel

$$-(CH_2-)_iOR^{11}$$

$R^{11}$ ist ein Wasserstoff oder ein einwertiger organischer Rest. Als einwertige organische Reste kommen die üblichen endblockierenden Gruppen, insbesondere niedere Alkylreste mit 1 bis 4 Kohlenstoffatomen, in Frage. Der Index i ist eine Zahl von 3 bis 20, wobei der Zahlenwert von 6 bevorzugt ist.

Diese Reste (d) können mittels einer wie oben bereits beschriebenen Hydrosilylierungsreaktion durch Addition von Alkenolen oder ihrer Derivate an SiH-Gruppen des Organopolysiloxans eingeführt werden. Beispiele für ein solches Alkenol und dessen endblockiertes Derivat sind Hexenol bzw. der Alkylether des Hexenols.

Der Rest (e) ist ein Alkanolderivat mit der allgemeinen Formel

$$-(CH_2-)_jCH_3$$

In diesem Rest (e) hat der Index j einen Zahlenwert von 5 bis 30, vorzugsweise 11 bis 17. Es handelt sich hier also um langkettige Alkylreste.

Diese Reste können durch hydrosilylierende Addition von $\alpha$-Olefinen an SiH-Gruppen des Organopolysiloxans erhalten werden.

Es folgt nun die Beschreibung des Restes $R^{2C}$.

Der Rest $R^{2C}$ ist ein nichtaromatenhaltiger Polyether mit der allgemeinen Formel

$$-(CH_2-)_k(OC_2H_4-)_l(OC_3H_6-)_nOR^{12}$$

Darin ist $R^{12}$ ein Wasserstoff- oder ein einwertiger organischer Rest. Vorzugsweise ist $R^{12}$ ein Wasserstoff-, Acetyl- oder Methylrest. Der Index k ist eine Zahl von 2 bis 6, der Index l eine Zahl von 1 bis 50 und der Index n eine Zahl von 0 bis 20. Vorzugsweise beträgt das Zahlenverhältnis $l : n < 4 : 1$. Besonders bevorzugt hat der Index k einen Wert von 3, der Index l einen Wert von 8 bis 30 und der Index n einen Wert von 4 bis 15.

Auch die Reste $R^{2C}$ können mittels einer wie oben bereits beschriebenen Hydrosilylierungsreaktion durch Addition von Alkenolpolyethern oder ihrer Derivate an SiH-Gruppen des Organopolysiloxans eingeführt werden.

Der molare prozentuale Anteil des Phenylderivats (a) am organofunktionell modifizierten Polysiloxan beträgt vorzugsweise mindestens 20 %, besonders bevorzugt mindestens 30 %.

Der molare prozentuale Anteil des Restes (b) am organofunktionell modifizierten Polysiloxan beträgt bevorzugt mindestens 7,5 %, besonders bevorzugt mindestens 15 %.

Der molare prozentuale Anteil des Restes (c) am organofunktionell modifizierten Polysiloxan beträgt vorzugsweise nicht mehr als 45 %, besonders bevorzugt nicht mehr als 35 %.

Der molare prozentuale Anteil des Restes $R^{2C}$ am organofunktionell modifizierten Polysiloxan beträgt vorzugsweise mindestens 10 %, besonders bevorzugt nicht mehr als 25 %.

In den folgenden Beispielen wird zunächst die Herstellung von erfindungsgemäßen organofunktionell modifizierten Organopolysiloxanen der Formel I gezeigt. Die in diesen Beispielen hergestellten Produkte werden mit E1, E2 und E3 bezeichnet. Dabei sollen die genannten Beispiele die erfindungsgemäßen Verbindungen veranschaulichen, jedoch auf keinen Fall den Anspruch auf die unten aufgeführten Verbindungen beschränken.

<u>Beispiele 1 bis 3</u>

Allgemeine Reaktionsbedingungen und -kontrolle für die Hydrosilylierung von Alkenen und Alkinen an Si-H-haltige Siloxane:

Die Reaktion wird in einem 1000-ml-Reaktionskolben, ausgestattet mit Rührer, Tropftrichter, Thermometer und Rückflußkühler, durchgeführt.

Die Umsatzkontrolle nach erfolgter Zugabe des Siloxans wird stündlich mittels Bestimmung des SiH-Wertes durchgeführt. Die Reaktion wird als beendet betrachtet, wenn der Umsatz mindestens 95 % des theoretischen Wertes beträgt.

Durch nachfolgende Destillation im Ölpumpenvakuum bei 130 °C werden das Lösungsmittel sowie flüchtige Nebenprodukte entfernt. Nach dem Abkühlen erfolgt eine Filtration, bei der die Katalysatorreste abgetrennt werden.

Herstellung des Entschäumers E1

Der Kolben wird mit einer Mischung aus 335,9 g (0,35 Mol) allylalkoholgestartetem Copolymer (bestehend aus Styrol- und Ethylenoxideinheiten, mit einer Molmasse von 957 g/Mol und einem Phenylanteil von 26,9 %), 51,9 g (0,35 Mol) Estragol und 11,7 g (0,12 Mol) 5-Hexen-1-ol beschickt. Unter Rühren werden 20 ppm des Katalysators (2,6 g Hexachloroplatinsäure $H_2PtCl_6$, ca. 1 %ig in Isopropanol suspendiert) zugegeben und anschließend auf 120 °C aufgeheizt. Bei dieser Temperatur werden 176,0 g des SiH-funktionalisierten Polydimethylsiloxans (0,12 Mol, $MD^{13}D^{H}{}_5M$) zu den anderen, vorgelegten Reaktanden innerhalb von ca. 30 Minuten derart zugetropft, daß trotz einsetzender exothermer Reaktion eine Temperatur von 130 °C nicht überschritten wird. Nach beendeter Zugabe wird bei maximal 130 °C weitergerührt. Die Umsatzkontrolle mittels SiH-Wert ergibt nach 2 h 100 % SiH-Umsatz.

Herstellung des Entschäumers E2

Der Kolben wird mit einer Mischung aus 211,5 g (0,22 Mol) allylalkoholgestartetem Copolymer aus Styrol- und Ethylenoxid wie in Beispiel E1, 65,4 g (0,35 Mol) Estragol und 24,8 g (0,44 Mol) 2-Propin-1-ol beschickt. Unter Rühren werden 20 ppm des Katalysators (2,1 g Hexachloroplatinsäure $H_2PtCl_6$, ca. 1 %ig in Isopropanol suspendiert) zugegeben und anschließend auf 120 °C aufgeheizt. Bei dieser Temperatur werden 155,4 g des SiH-funktionalisierten Polydimethylsiloxans (0,11 Mol, $M^HD_{13}D^H6M^H$) zu den anderen, vorgelegten Reaktanden innerhalb von ca. 30 Minuten derart zugetropft, daß trotz einsetzender exothermer Reaktion eine Temperatur von 130 °C nicht überschritten wird. Nach beendeter Zugabe wird bei maximal 130 °C weitergerührt. Die Umsatzkontrolle mittels SiH-Wert ergibt nach 7 h 95 % SiH-Umsatz.

Herstellung des Entschäumers E3

Der Kolben wird mit einer Mischung aus 182,3 g (0,19 Mol) allylalkoholgestartetem Copolymer aus Styrol- und Ethylenoxid wie in Beispiel E1, 61,5 g (0,38 Mol) Eugenol, 15,7 g (0,09 Mol) ethoxyliertem 2-Butin-1,4-diol (bei der BASF unter dem Handelsnamen Golpanol BEO erhältlich) sowie 277,1 g eines gewöhnlichen Polyethers (0,19 Mol, bestehend aus Propylen- und Ethylenoxideinheiten, mit einem Ethylenoxidanteil von 42 Gew.-%) beschickt und mit 187,9 g SiH-funktionalisiertem Polydimethylsiloxan (0,02 Mol, $MD_{96}D^H{}_{32}M$) zur Reaktion gebracht. Die Reaktionsbedingungen und die Katalysatorkonzentration sind identisch mit den Angaben im Beispiel E2.

Struktur der den Beispielen E1, E2 und E3 zugrunde liegenden Siloxane

E1:

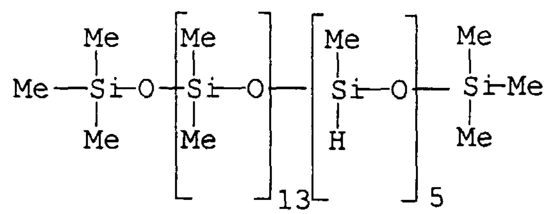

E2:

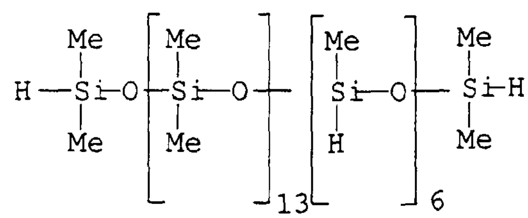

E3:

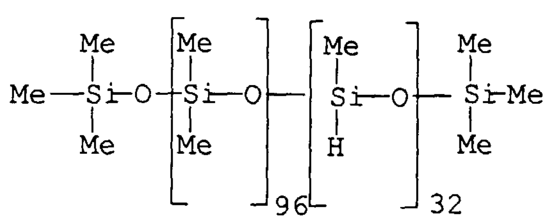

Substituenten:

Estragol

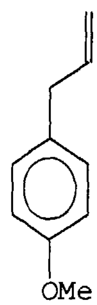

2-Propin-1-ol

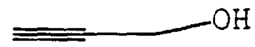

Eugenol

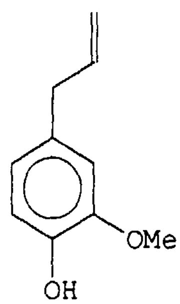

Golpanol

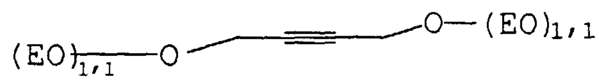

Die anwendungstechnischen Vergleichsversuche werden mit Produkten des Standes der Technik und den Verbindungen E1, E2 und E3 durchgeführt. Als Vergleichssubstanz dient der Entschäumer A, der unter dem Namen TEGOPREN 5851 in den Handel gelangt und bei der Th. Goldschmidt AG erhältlich ist:

Entschäumer A:

Si-H-haltiges Siloxan der Formel

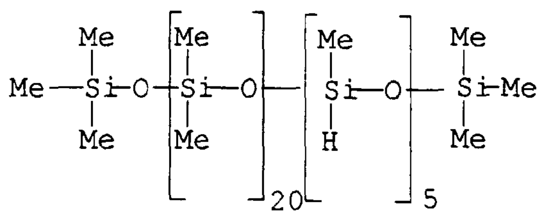

mit einem allylalkoholgestarteten Copolymer (bestehend aus Propylen- und Ethylenoxideinheiten, mit einem Ethylenoxidanteil von 75 %) als Liganden.

Zur Prüfung des Entschäumungsvermögens der erfindungsgemäßen Siloxane oder der diese enthaltenden Zübereitungen werden die Siloxane oder die Zübereitungen in einem Additivpaket des Standes der Technik gelöst und eine bestimmte Menge dieser Mischung in 1500 g additivfreien Dieselkraftstoff eingerührt, der mit 200 ppm destilliertem Wasser (pH = 7) versetzt ist. In Fachkreisen wird diese Mischung auch als feuchter Diesel bezeichnet. Das Mischungsverhältnis des Siloxans oder seiner Zubereitung zum Additivpaket und die zum Kraftstoff gegebene Menge werden so gewählt, daß die gewünschte Siloxankonzentration und gleichzeitig eine Konzentration des Additivpaketes von 150 ppm im Dieselkraftstoff erzielt werden. Die Konzentrationen der erfindungsgemäßen Verbindungen im Dieselkraftstoff werden zwischen 8 und 15 ppm variiert.

Der Schaumzerfall des mit Additiv und Entschäumer versetzten Dieselkraftstoffes wird in einer Druckapparatur getestet. Die entsprechende Methode, die von der Firma ELF entwickelt worden ist, hat sich zu einem Standard der Messung von Schaumhöhe und Schaumzerfallszeiten entwickelt und kann über die Firma Verre + Science, Frankreich, bezogen werden.

Tabelle 1

| Ergebnisse der Entschäumungstests Prozentuale Angaben (Blindwert = 100 %) | | | | | |
|---|---|---|---|---|---|
| Entschäumer | Einsatzkonzentration [ppm] | Schaumhöhe nach 1 Tag | Schaumzerfallszeit nach 1 Tag [s] | Schaumhöhe nach 7 Tagen | Schaumzerfallszeit nach 7 Tagen [s] |
| Blindwert | | 100 | 100 | 100 | 100 |
| E1 | 15 | 57 | 2 | 94 | 16 |
| E2 | 15 | 68 | 2 | 89 | 21 |
| E3 | 10 | 62 | 3 | 85 | 15 |
| A | 15 | 74 | 16 | 93 | 25 |

Die Zusammenstellung der Ergebnisse zeigt, daß die erfindungsgemäßen aromatenhaltigen Siliconpolyether-Copolymere sich gut zur Entschäumung von feuchtem Dieselkraftstoff eignen. Während die Schaumhöhe auf vergleichbarem Niveau mit dem herkömmlichen Polyethersiloxan liegt, zeigt sich bei den Schaumzerfallszeiten insbesondere am ersten Tage eine erhebliche Verbesserung. Auch nach sieben Tagen Lagerung beobachtet man noch signifikante Unterschiede zugunsten der erfindungsgemäßen aromatenhaltigen Siliconpolyether-Copolymere.

## Patentansprüche

**1.** Organofunktionell modifizierte Polysiloxane der allgemeinen Formel I

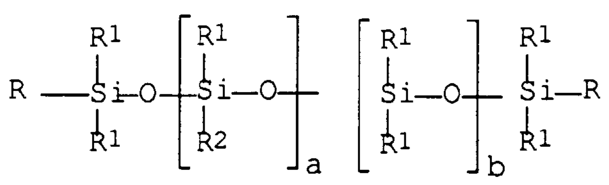

wobei

- R der Rest $R^1$ oder $R^2$ ist,
- $R^1$ Alkylreste mit 1 bis 4 Kohlenstoffatomen oder Arylreste sind, jedoch mindestens 80 % der Reste $R^1$ Methylreste sind,
- $R^2$ die Reste $R^{2A}$, $R^{2B}$ und $R^{2C}$ bedeuten, wobei die Reste $R^{2A}$ aus folgenden Resten ausgewählt sind:

(a) ein Phenylderivat mit der allgemeinen Formel

$$-R^3-(C_6H_{4-z}R^4{}_z)-OR^5$$

wobei

$R^3$ ein zweiwertiger Rest ist, der aus einem oder mehreren Kohlenwasserstoffresten mit 1 bis 18 Kohlenstoffatomen zusammengesetzt ist, die gegebenenfalls substituiert sind,
$R^4$ ein Hydroxyrest, ein Alkylrest mit 1 bis 6 Kohlenstoffatomen oder ein Alkoxyrest mit 1 bis 6 Kohlenstoffatomen ist, und
z eine Zahl von 0 bis 4 ist,
$R^5$ ein einwertiger Rest ist, der gleich oder verschieden ist und aus einem Wasserstoffrest oder Alkylrest mit 1 bis 6 Kohlenstoffatomen besteht,

(b) ein Polyetherrest der allgemeinen Formel

$$-(Y)[O(C_2H_{4-d}R^6{}_dO)_m(C_xH_{2x}O)_pZ]_w$$

ist, mit der Bedeutung

d = 1 bis 3,
m ≥ 1,
x = 2 bis 4,
p ≥ 1,
w = 1 bis 4,
Summe m+p = 3 bis 100,
$R^6$ = ein Wasserstoffrest, ein einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alkoxyrest und Hydroxyrest ausgewählt sind, wobei die Reste $R^6$ unterschiedlich sein können, jedoch pro Copolymermolekül mindestens ein Rest $R^6$ einen gegebenenfalls substituierten Aromaten bezeichnet,
Z = ein Wasserstoffrest oder ein einwertiger organischer Rest,
Y = ein (w+1)-bindiger Kohlenwasserstoffrest mit 1 bis 18 Kohlenstoffatomen, der auch verzweigt sein kann,

die Reste $R^{2B}$ aus folgenden Resten ausgewählt sind:
(c) ein Alkenderivat mit der allgemeinen Formel

$$\begin{array}{l} -CH_{1-e}-[R^7O(R^8O)_fH]_e \\ \| \\ CH_{2-g}-[R^7O(R^8O)_hH]_g \end{array}$$

wobei

$R^7$ einen Rest der Formel $-CR^9H-$ bedeutet mit $R^9$ gleich Wasserstoffatom oder einwertiger organischer Rest,
$R^8$ einen Rest der Formel $C_2H_{4-d}R^{10}{}_d$ bedeutet mit $R^{10}$ gleich Wasserstoffatom oder einwertiger Kohlenwasserstoffrest mit 1 bis 18 Kohlenstoffatomen, der auch aromatisch und gegebenenfalls auch ein substituierter Aromat sein kann, dessen Substituenten aus den Gruppen Wasserstoffrest, Alkylrest mit 1 bis 6 Kohlenstoffatomen, Alkoxyrest und Hydroxyrest ausgewählt sind, wobei die Reste $R^{10}$ unterschiedlich sein können,
e und g jeweils 0 oder 1 sind, wobei die Summe e+g 1 oder 2 ist,
f und h jeweils 0 oder eine ganze Zahl sind, wobei die Summe f+h durchschnittlich 0 bis 14 ist,

(d) der Rest $-(CH_2-)_iOR^{11}$,
wobei

$R^{11}$ ein Wasserstoff- oder ein einwertiger organischer Rest,
i eine Zahl von 2 bis 20 ist,

(e) der Rest $-(CH_2-)_jCH_3$,
wobei

j eine Zahl von 5 bis 30 ist,

der Rest $R^{2C}$ der Rest

$$-(CH_2-)_k(OC_2H_4-)_l(OC_3H_6-)_nOR^{12}$$

ist, wobei

$R^{12}$ ein Wasserstoff- oder ein einwertiger organischer Rest,
k eine Zahl von 2 bis 6,
l eine Zahl von 1 bis 50,
n eine Zahl von 0 bis 20 ist,

mit der Maßgabe, daß mindestens 10 % der Reste $R^2$ gleich dem Rest $R^{2A}$ sind,
wobei mindestens 10 % der Reste $R^2A$ gleich dem Rest (a) sind und mindestens 10 % gleich dem Rest (b) sind, die Summe a+b eine Zahl von 2 bis 400 und das Verhältnis der Zahlen b/a zwischen 0,2 und 20 liegt.

**2.** Organofunktionell modifizierte Polysiloxane nach Anspruch 1, dadurch gekennzeichnet, daß mindestens 20 % der Reste $R^2$ gleich dem Rest $R^2A$ sind, wobei mindestens 25 % der Reste $R^{2A}$ gleich dem Rest (a) sind und mindestens 25 % gleich dem Rest (b) sind.

**3.** Organofunktionell modifizierte Polysiloxane nach Anspruch 1 oder 2, dadurch gekennzeichnet, daß der Rest $R^2$ zu mindestens 10 % aus den Resten $R^2B$ besteht.

**4.** Organofunktionell modifizierte Polysiloxane nach den Ansprüchen 1 bis 3, wobei der maximale Anteil von $C_xH_{2x}O$ im Polyetherrest (b) 65 Gew.-% beträgt.

**5.** Organofunktionell modifizierte Polysiloxane nach den Ansprüchen 1 bis 4, wobei das Phenylderivat ein Phenolderivat ist.

**6.** Organofunktionell modifizierte Polysiloxane nach den Ansprüchen 1 bis 4, wobei das Phenylderivat ein Anisolderivat ist.

**7.** Organofunktionell modifizierte Polysiloxane nach den Ansprüchen 1 bis 4, wobei das Phenylderivat Eugenol ist.

**8.** Organofunktionell modifizierte Polysiloxane nach den Ansprüchen 1 bis 4, wobei das Phenylderivat Estragol ist.

**9.** Verwendung organofunktionell modifizierter Polysiloxane gemäß den Ansprüchen 1 bis 8 zum Entschäumen von flüssigen Kohlenwasserstoffsystemen.